Europäisches Patentamt

European Patent Office

Office européen des brevets

(11) Publication number: **0 162 401**
**B1**

(12) **EUROPEAN PATENT SPECIFICATION**

(45) Date of publication of patent specification: **10.05.89**

(21) Application number: **85105888.3**

(22) Date of filing: **13.05.85**

(51) Int. Cl.⁴: **B 27 G 5/02**

(54) **Apparatus for locating a workpiece.**

(30) Priority: **22.05.84 GB 8413014**

(43) Date of publication of application:
**27.11.85 Bulletin 85/48**

(45) Publication of the grant of the patent:
**10.05.89 Bulletin 89/19**

(84) Designated Contracting States:
**AT BE CH DE FR GB IT LI LU NL SE**

(56) References cited:
**CH-A- 12 103**
**CH-A- 16 205**
**GB-A-1 307 164**

(73) Proprietor: **Gripperrods International plc**
**Blatchford Road**
**Horsham, Sussex RH13 5QQ (GB)**

(72) Inventor: **Adams, Sidney James**
**24 Chatsworth Avenue**
**Hendon London NW4 1HT (GB)**
Inventor: **Grimes, David Kenneth**
**41 Kneller Road**
**Twickenham Middlesex TW2 DF (GB)**

(74) Representative: **Brooke-Smith, Fred et al**
**STEVENS, HEWLETT & PERKINS 5 Quality Court**
**Chancery Lane**
**London WC2A 1HZ (GB)**

Courier Press, Leamington Spa, England.

# Description

The present invention relates to an apparatus for locating a workpiece for sawing, and more particularly for locating a workpiece to be cut at a chosen angle and at a chosen position along its length.

Devices for locating an elongate workpiece for the purpose of making a saw cut at a chosen angle are already known, such as those disclosed in U.K. Patent No. 1358251. This prior specification discloses an apparatus comprising a base on which the workpiece can be placed, and a saw guide defining a sawguide plane extending upwardly from the base.

According to the present invention, such a location apparatus is characterised in that the saw guide comprises at least one pair of rollers rotatably mounted on parallel axes and between which the saw guide plane extends, at least one of the rollers being raised above the base with a boss on the base below the roller which boss forms an abutment for a face of the workpiece for locating said face close to the roller but spaced therefrom, and in that the or each boss has a part-circular form concentric with its roller and with its side facing the saw guide plane relieved so that it does not protude beyond a tangent plane to the roller in the direction of the saw guide plane.

It is known to use spaced parallel rollers as a saw guide, to be rotated by the movement of the saw blade, e.g. U.K. Patent No. 1307164, to reduce the wear on these members from the rubbing of the saw teeth against them. It is generally desirable to locate the workpiece as close as possible to the guide means and particularly when sawing a small cross-section workpiece it can be helpful to place it against the guide means to prevent clatter. If the workpiece bears against the rollers, however, it will hinder or prevent rotation, so losing the advantage that could otherwise be obtained from this form of guide means. By means of the present invention, it is possible to locate a workpiece very close to guide means in the form of rollers, without hindering the rollers in any way.

Preferably, the or each roller comprises a fixed support and an outer tube rotatably located on the support. Preferably, the support is releasably secured to the base by fixing means on the underside of the base.

In preferred arrangements according to the invention both rollers of the or each pair are raised above the base and have bosses below them, the diameters of the bosses below the rollers of each pair being equal.

The or each boss or protuberance is preferably integrally formed with the base.

A specific embodiment of the invention will now be described in detail with reference to the accompanying drawings, in which:

Figure 1 is a plan view of a location apparatus, with a fragmented view of a workpiece in position on the apparatus; and

Figure 2 is a section along the line T-T of Figure 1.

The location apparatus according to the invention has a base 1 on which is mounted an adjustable fence 12 for locating a workpiece which is to be cut by a saw guided by two pairs of rollers 9.

The base 1 provides a platform 2 resting on a peripheral flange 3, the sides of which have cutaway portions 4. A vertical hole 5 extends through the base 1 at each corner thereof into which can be inserted bench stops (not shown) to position the apparatus on a work top.

The rollers 9 are mounted on bosses 6 projecting from the platform 2, the rollers 9 of each pair being separated by a gap 8 whose width is approximately equal to the thickness of a typical sawblade (not shown). The gaps 8 together define a plane within which movement of the blade is restricted when it is inserted between the rollers 9 of each pair. As can be seen from the drawings, the circular bosses 6 are concentric with the rollers 9 to project radially beyond the periphery of the rollers except at the gap between the rollers where flat ledges on the bosses maintain the width of the gap and thereby allow the saw blade to pass between the bosses.

Each roller 9 comprises a tube rotatably mounted on a fixed pillar 10 which has an increased diameter portion 7 at its upper end to prevent the tube from being lifted relative to the pillar. Each pillar 10 is secured to the platform 2 by a nut 11 located underneath the boss 6, and is of slightly smaller diameter than the boss.

The fence 12 for locating the workpiece on the platform has an interrupted side wall 12a and an opposite side wall 12b each providing a locating face for a side face of a workpiece (not shown).

Downwardly projection pegs 13, 14 at each end of the fence, offset towards the side face 12a, and an intermediate locking screw 15 adjustably locate the fence on the platform using either of two sets of apertures in the platform, each set comprising a circular hole 16 and two slots 17, 18 concentric with the hole. The angular orientation of the fence 12 can be adjusted by pivoting the fence on the peg 13 in the hole 16, the other peg 14 and the screw 15 sliding in their respective slots 17, 18.

The slot 18 has a T-shaped cross-section in order to locate a nut (not shown) beneath the platform 2, which is threaded onto the locking screw 15. The locking screw can then be twisted onto the nut to fix the fence in a chosen position. It is alternatively possible to dispose a locking screw below the platform with its engaging nut above the platform.

The two sets of apertures 16, 17, 18 are disposed symmetrically with respect to a line perpendicular to the saw guide plane and midway between the pairs of rollers 9. The hole 16 in each set of apertures is adjacent to the pair of rollers 9 associated with that set.

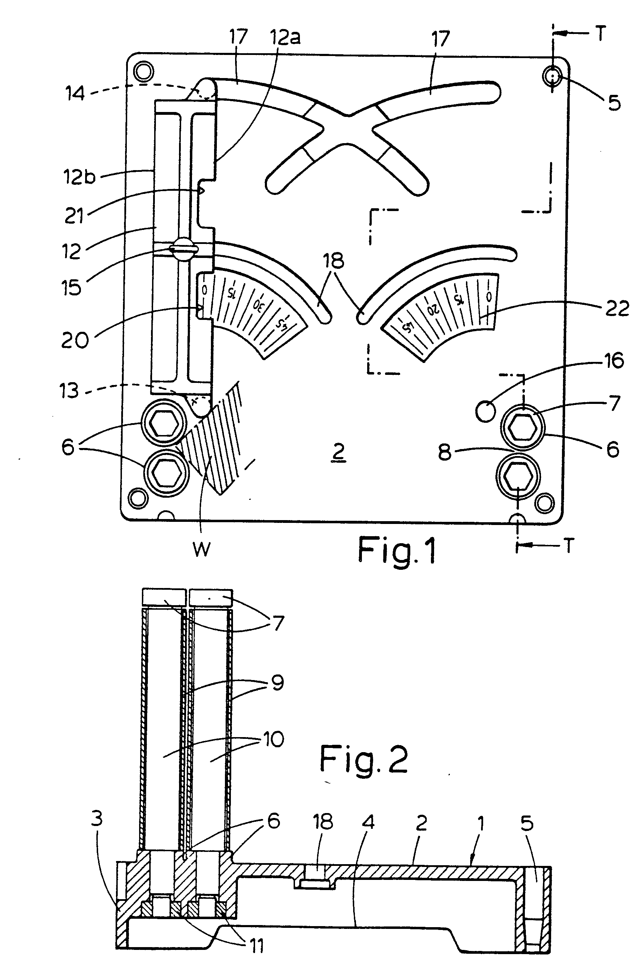

Figure 1 shows the fence 12 located with the peg 13 in the hole 16 and the peg 14 in the slot 17; in this configuration, the side 12a of the fence faces the middle region of the platform 2 and provides the workpiece guide plane. The locking screw 15 is located equidistant from the pegs 13, 14, so that the fence 12 may equally be positioned with its ends reversed. In this alternative configuration, the side 12b will then face the middle of the platform 2 and will provide a workpiece guide plane which, for any given angular orientation of the fence, is located nearer the centre of the platform.

The fence 12 is provided with two pointers 20, 21 and the platform 2 is provided with a scale 22 adjacent to each slot 18, for indicating the angle between the workpiece guide plane and the saw guide plane.

Depending on the configuration, one or other of the pointers 20, 21 will provide a reading on the associated scale 22. The scale may be used in either configuration because the pointers 20, 21 both lie on the line joining the centres of the pegs 13, 14, parallel to the fence sides.

In order to make a cut at the required angle at any arbitary point along the length of the workpiece W, the fence is positioned with its peg 14 in one of the holes 16 and locked in position by tightening the locking screw 15 by hand. The pointer 21 indicates on the scale 22 the angle of cut, which may be from 0° to 45°. The side 12b of the fence then provides the location face, which over this range of adjustment defines a space for the workpiece clear of the adjacent pair of saw guide rollers. Because the workpiece is sufficiently displaced laterally from these rollers, it can project past them to bring the location for the cut into the saw guide place. The workpiece is cut by a saw guided by the rollers 9 which rotate as the saw moves. In order to make a feathered cut of 45°, at the squared end of the workpiece, for example the workpiece being first cut with the scale pointer at 0°, the fence 12 is positioned with the peg 13 in one of the two holes 16, e.g. as shown in Figure 1, and pivoted to the 45° position. The workpiece W is located by its side face against the wall 12a and by its end face against the further of the two bosses 6. The workpiece is thus fixed lengthwise by abutment of its end face against a boss 6 with the result that it is appropriately positioned for a feathered cut, but does not contact the rollers so that they can still rotate freely.

This configuration may also be used for making cuts of angles other than 45° but the saw cut will not of course pass exactly through the end edge when the workpiece is at an angle such that its end face abuts a boss.

For all the above-described methods of using this embodiment of the invention, the fence may be positioned using either of the sets of apertures and, accordingly, locating the workpiece close to or against either of the pairs of rollers. The provision of the two alternative configurations firstly allows an angled cut to be made in either sense relative to a side face of the workpiece, which is useful for cutting picture frame mouldings, for example, that can only be located securely by one of their side faces, and also makes the apparatus equally convenient for right- or left-handed use.

## Claims

1. A location apparatus for use in making a saw cut in a workpiece, comprising a base (1) on which the workpiece can be placed, a saw guide defining a saw guide plane extending upwardly from the base, characterised in that the saw guide comprises at least one pair of rollers (9) rotatably mounted on parallel axes and between which the saw guide plane extends, at least one of the rollers being raised above the base (1) with a boss (6) on the base below the roller which boss forms an abutment for a face of the workpiece for locating said face close to the roller but spaced therefrom, and in that the or each boss (6) has a part-circular form concentric with its roller (9) and with its side facing the saw guide plane relieved so that it does not protude beyond a tangent plane to the roller (9) in the direction of the saw guide plane.

2. Apparatus according to claim 1 characterised in that the or each roller (9) comprises a fixed support (10) and an outer tube rotatably mounted and located on the support (10).

3. Apparatus according to claim 2 characterised in that a radial projection is provided at the upper end of the support (10) to retain the tube (9) thereon.

4. Apparatus according to claim 2 or claim 3 characterised in that the support (10) is releasably secured to the base (1) by fixing means (11) on the underside of the base.

5. Apparatus according to any one of the preceding claims characterised in that the or each boss (6) or protuberance is integrally formed with the base (1).

6. Apparatus according to any one of the preceding claims characterised in that both rollers of the or each pair are raised above the base and have bosses (6) below them, the diameters of the bosses below the rollers of each pair being equal.

## Patentansprüche

1. Positioniereinrichtung zur Verwendung bei der Herstellung eines Sägeschnittes in einem Arbeitsstück, mit einer Basis (1), auf der das Arbeitsstück angeordnet werden kann, und einer sich von der Basis nach oben erstreckenden, durch eine Sägeführung begrenzten Sägeführungsebene, dadurch gekennzeichnet, daß die Sägeführung wenigstens zwei Walzen (9) aufweist, die drehbar auf parallelen Achsen angeordnet sind und zwischen denen sich die Sägeführungsebene erstreckt, wobei wenigstens eine Walze über die Basis (1) mit einem Vorsprung (6) an der Basis unterhalb der Walze über die Basis (1) ragt, welcher Vorsprung einen Anschlag für eine Fläche des Arbeitsstückes bildet, um diese Fläche nahe der Walze jedoch getrennt davon anzuordnen, und daß der oder jeder Vorsprung 6 eine teilkreisförmige, mit seiner Walze (9) konzentrische Form hat bei der die der Sägeführungsebene gegenüberliegende Fläche ausgenommen ist, so daß sie nicht über die Tangentialebene an

EP 0 162 401 B1

die Walze (9) in Richtung der Sägeführungsebene vorsteht.

2. Einrichtung nach Anspruch 1, dadurch gekennzeichnet, daß die oder jeder Walze (9) einen festen Träger (10) und ein äußeres Rohr aufweisen, das drehbar auf dem Träger (10) angeordnet ist.

3. Einrichtung nach Anspruch 2, dadurch gekennzeichnet, daß ein radialer Fortsatz am oberen Ende des Trägers (10) vorgesehen ist, um das Rohr (9) darauf zu halten.

4. Einrichtung nach Anspruch 2 oder 3, dadurch gekennzeichnet, daß der Träger (10) lösbar auf der Basis (1) durch Befestigungsmittel (11) an der Unterseite der Basis befestigt ist.

5. Einrichtung nach einem der vorhergehenden Ansprüche, dadurch gekennzeichnet, daß die oder jeder Verdickung (6) oder Vorsprung mit der Basis (1) einstückig ist.

6. Einrichtung nach einem der vorhergehenden Ansprüche, dadurch gekennzeichnet, daß beide Walzen des oder jedes Paares über die Basis gehoben sind und Verdickungen (6) unterhalb haben, wobei die Durchmesser der Verdickungen unter den Walzen jedes Paares gleich sind.

**Revendications**

1. Appareil de positionnement destiné à être utilisé pour pratiquer une découpe à la scie sur une pièce à usiner, comportant une base (1) sur laquelle la pièce à usiner peut être placée, un guide-scie définissant un plan de guidage de scie qui s'étend vers le haut depuis la base, caractérisé en ce que le guide-scie comporte au moins une paire de rouleaux (9) montés mobiles en rotation sur des axes parallèles et entre lesquels s'étend le plan de guidage de scie, l'un au moins des rouleaux étant surélevé par rapport à la base (1) grâce à un bossage (6) prévu sur la base, au-dessous du rouleau, lequel bossage constitue une butée pour une face de la pièce à usiner, en vue de positionner ladite face près du rouleau mais à une certaine distance de celui-ci, et en ce que le ou les bossages (6) possèdent une forme particulière concentrique avec leur rouleau (9) et présentent sur leur côté tourné vers le plan de guidage de scie une dépouille, de manière à ne pas s'avancer au-delà d'un plan tangent au rouleau (9) dans la direction du plan de guidage de scie.

2. Appareil selon la revendication 1, caractérisé en ce que le ou les rouleaux (9) comportent un support fixe (10) et un tube extérieur monté mobile en rotation et disposé sur le support (10).

3. Appareil selon la revendication 2, caractérisé en ce qu'il est prévu une projection radiale au niveau de l'extrémité supérieure du support (10), pour retenir le tube (9) sur celui-ci.

4. Appareil selon la revendication 2 ou la revendication 3, caractérisé en ce que le support (10) est assujetti d'une manière détachable à la base (10) grâce à des moyens de fixation (11) prévus sur le dessous de la base.

5. Appareil selon l'une quelconque des revendications précédentes, caractérisé en ce que le ou les bossages (6) ou protubérances sont formés solidairement avec la base (1).

6. Appareil selon l'une quelconque des revendications précédentes, caractérisé en ce que les deux rouleaux de la ou des paires de rouleaux sont surélevés par rapport à la base et possèdent sous eux des bossages (6), les diamètres des bossages situés sous les rouleaux de chaque paire étant égaux.

Fig.1

Fig.2